# EUROPÄISCHE PATENTSCHRIFT

(11) **EP 1 840 350 B1**
(45) Veröffentlichungstag und Bekanntmachung des Hinweises auf die Patenterteilung: **07.12.2011**
(21) Anmeldenummer: 07006567.7
(22) Anmeldetag: 29.03.2007
(51) Int. Cl.: F01N 13/10, F01N 13/14, F16L 59/02, F02B 77/11

(54) **Verkleidungsvorrichtung, insbesondere für Abgasrohre von Aggregaten**
Cladding device, in particular for exhaust gas pipes from power units
Dispositif de revêtement, en particulier pour tubulures d'échappement d'agrégats

(30) Priorität: 29.03.2006 DE 202006005144 U
(43) Veröffentlichungstag der Anmeldung: 03.10.2007
(73) Patentinhaber: BDD Beteiligungs GmbH, 68169 Mannheim (DE)
(72) Erfinder: Franz, Manfred, 67346 Speyer (DE)
(74) Vertreter: Schmitt, Meinrad

(56) Entgegenhaltungen:
- DD-A1- 80 714
- DE-A1- 10 359 062
- US-B1- 6 318 734

## Beschreibung

Die Erfindung bezieht sich auf eine Verkleidungsvorrichtung, insbesondere für Abgasrohre von Aggregaten gemäß den im Oberbegriff des Anspruchs 1 angegebenen Merkmalen.

Aus der DE 103 59 062 A1 ist eine derartige Verkleidungsvorrichtung bekannt, enthaltend ein als Abgasrohr ausgebildetes Maschinenelement, welches mit einem Aggregat bzw. Motor verbunden ist. Das Maschinenelement ist zumindest teilweise von einer Verkleidung mit einem Befestigungsrand umgeben, welcher von einer Randleiste übergriffen wird. Ferner ist eine als Flanschplatte bezeichnete Halteeinrichtung vorgesehen, mit welcher ein Einlass des Maschinenelements verschweisst ist. Die Verkleidung ist gemeinsam mit der genannten Flanschplatte über die Randleiste mittels einer Befestigungsvorrichtung in Form von Schrauben am Aggregat festgelegt.

Aus der US 6 318 734 B1 ist eine Verkleidungsvorrichtung mit einer Halteeinrichtung bekannt, welche zwischen einem Aggregat und einem als Abgasrohr ausgebildeten Maschinenelement mittels einer wiederum als Schrauben ausgebildeten Befestigungsvorrichtung festgelegt ist. Die Halteeinrichtung enthält Profile, in welche ein Rand der Verkleidung formschlüssig und abdichtend eingreift, wobei die Verbindung mittels Schrauben erfolgt.

Des Weiteren ist aus der EP 1 134 478 B1 eine Verkleidungsvorrichtung bekannt, welche als eine Isoliervorrichtung für ein als Abgasrohr ausgebildet und von einem heißen Medium, nämlich dem Abgas, eines als Motor ausgebildeten Aggregats durchströmbar ist. Diese Vorrichtung enthält einen, das genannte Maschinenelement umgebenenden, Innenmantel sowie einen zu diesem beabstandet angeordneten Außenmantel, wobei zwischen diesen Mänteln ein Hohlraum vorhanden ist, in welchen Isoliermaterial austauschbar eingefüllt ist. Der Innenmantel und der Außenmantel sind flexibel derart ausgebildet, dass diese durch Aufspreizen ihrer Enden über das Maschinenelement bzw. das Abgasrohr geschoben werden können und nachfolgend mittels einer Befestigungsvorrichtung, beispielsweise in Form eines oder mehrerer Spannbänder, unmittelbar auf dem Maschinenelement festlegbar sind, welches mit dem Aggregat in bekannter Weise verbunden ist. Diese Verkleidungsvorrichtung hat sich für viele Anwendungsfälle gut bewährt, doch besteht für weitere Anwendungsfälle aufgrund besonderer Anforderungen ein erheblicher Bedarf nach hiervon abweichenden Lösungen.

Hiervon ausgehend liegt der Erfindung die Aufgabe zugrunde, die Verkleidungsvorrichtung mit einem geringen konstruktiven Aufwand dahingehend weiterzubilden, dass erhöhte Anforderungen erfüllt werden und insbesondere eine verbesserte Dämmwirkung erreicht wird. Die Verkleidungsvorrichtung soll einen geringen Fertigungs- und / oder Montageaufwand erfordern, wobei vor allem Eingriffe oder Änderungen des Aggregats vermieden oder aber zumindest auf ein Minimum reduziert werden sollen. Ferner soll die Temperatur an der äußeren Oberfläche der Verkleidungsvorrichtung reduziert werden, damit insbesondere durch aus dem Aggregat austretenden Kraftstoff, wie insbesondere Dieselkraftstoff oder solchen enthaltende Dämpfe, kein Brand entsteht und das insoweit bestehende Gefährdungspotential mit hoher Sicherheit ausgeschlossen werden kann.

Die Lösung dieser Aufgabe erfolgt gemäß den im Patentanspruch 1 angegebenen Merkmalen.

Die erfindungsgemäß vorgeschlagene Verkleidungsvorrichtung zeichnet sich durch eine einfache und funktionsgerechte Konstruktion aus und kann ohne besonderen Aufwand und in einfacher Weise mit dem Maschinenteil insbesondere einem Abgasrohr, und / oder dem Aggregat, insbesondere einem Motor, verbunden werden. Änderungen oder gar eine Demontage, sei es des Aggregats oder des Maschinenelements, sind zur Montage und / oder Befestigung der Verkleidungsvorrichtung nicht erforderlich, so dass die Verkleidungsvorrichtung problemlos auch nachträglich in bereits bestehende Anlagen oder in Kraftfahrzeuge eingebaute Motoren oder dergleichen integriert werden können. Die Verkleidungsvorrichtung enthält eine Halte- und / oder Stützeinrichtung, welche in bevorzugter Weise nach dem Klemmprinzip mittels der Befestigungsvorrichtung auf und / oder an dem Aggregat befestigbar und / oder festlegbar ist. Die Befestigungsvorrichtung ist in vorteilhafter Weise als Klemmvorrichtung ausgebildet und / oder zwischen dem Maschinenelement und dem Aggregat derart angeordnet, dass die Stützeinrichtung bevorzugt mit vorgebbarer und / oder vorgegebener Vorspannung gegen das Aggregat gepresst wird. Des Weitern enthält die Stützeinrichtung Profile oder Profilelemente derart, dass die Verkleidung, und zwar zweckmäßig mit ihren dem Aggregat bzw. der Stützeinrichtung zugewandten Enden, dicht mit dieser verbunden ist, so dass im Verbindungsbereich zwischen der Stützeinrichtung und der Verkleidung ein unerwünschter Wärmeverlust vermieden wird. Ferner enthält die Verkleidung vorteilhaft Dämmmaterial, um die Oberflächentemperatur an der Außenseite der Verkleidung möglichst gering zu halten. Darüber hinaus enthält die Befestigungsvorrichtung in besonders zweckmäßiger Weise wenigstens ein oder mehrere federelastische Elemente, durch welche eine optimierte Klemmung der Stützeinrichtung und / oder der mit dieser verbundenen Verkleidung erreicht wird. Erfindungsgemäß ist die Verkleidung nicht unmittelbar auf dem Maschinenelement bzw. Abgasrohr angeordnet, sondern mittelbar, und in zweckmäßiger Weise nach dem Klemmprinzip auf dem Maschinenelement angeordnet und / oder mit diesem gekoppelt. Des Weiteren ist zwischen dem Maschinenelement und der dieses zumindest teilweise umgehenden Verkleidung ein vorgegebener Abstand und somit ein Luftpolster vorhanden, aufgrund dessen die Isolierwirkung weiter verbessert ist. Die Stützeinrichtung ist unter Vorspannung bezüglich dem und / oder auf dem Aggregat festgelegt, so dass Fertigungsungenauigkeiten und / oder Toleranzen und / oder Abweichungen von einer exakten Ausrichtung des Maschinenelements bezüglich dem Aggregat in einfacher Weise und ohne zusätzliche Maßnahmen ausgeglichen werden. Da die Verkleidung von der Stützeinrichtung in bevorzugter Weise lösbar ist, sind etwaige Servicemaßnahmen oder Reparaturen des Maschinenelements in einfacher Weise durchführbar.

Weiterbildungen und besondere Ausgestaltungen der Erfindung sind in den Unteransprüchen sowie der nachfolgenden Beschreibung von Ausführungsbeispielen angegeben. Aus sei ausdrücklich festgehalten, dass die erfindungsgemäß Vorrichtung nicht allein in Kombination mit Motoren und Abgasleitungen derselben vorgesehen ist, sondern im Rahmen der Erfindung auch für beliebig ausgebildete Aggregate wie Abgasturbolader, Heißgasgebläse, Turbinen und denselben zugeordneten Maschinenelementen für von heißen Medien, wie Dampf, heiße Verbrennungsluft vorgesehen ist.

Die Erfindung wird nachfolgend anhand der in der Zeichnung dargestellten besonderen Ausführungsbeispiele näher erläutert, ohne dass insoweit eine Beschränkung erfolgt. Es zeigen in schematischen Darstellungen:
- Fig. 1: einen axialen Schnitt durch die Verkieidungsvorrichtung und das als Abgasrohr ausgebildete Maschinenelement sowie teilweise das als Motor ausgebildete Aggregat,
- Fig. 2: ein zweites Ausführungsbeispiel zur Festlegung der Verkleidung nach dem erfindungsgemäßen Klemmpinzip mit einer Rohrschelle,

- Fig. 3: ein drittes Ausführungsbeispiel mit einem das Abgasrohr teilweise umgebenden Spannband,
- Fig. 4: ein viertes Ausführungsbeispiel mit Federpaketen zwischen dem Abgasrohr und der Stützeinrichtung,
- Fig. 5: ein fünftes Ausführungsbeispiel mit federelastischen Elementen zwischen dem Abgasrohr und der Stützeinrichtung,
- Fig. 6: eine perspektivische Ansicht der Verkleidungsvorrichtung entsprechend Fig. 1
- Fig. 7, 8: eine besondere Ausgestaltung der Verkleidungsvorrichtung, welche einen von Luft durchströmbaren Zwischenraum aufweist.

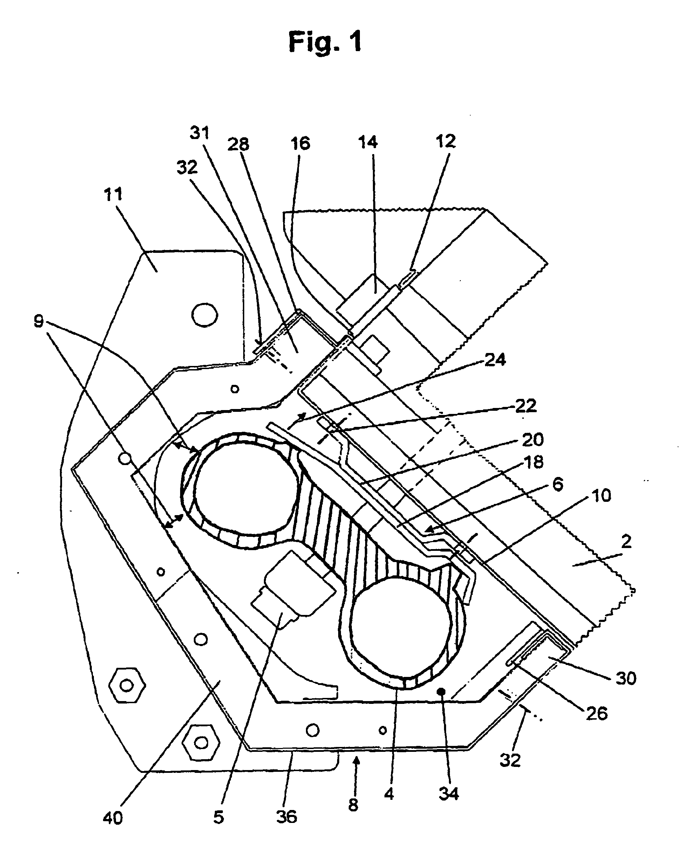

In Fig. 1 ist teilweise der äußere Bereich des als Motor ausgebildeten Aggregats 2 dargestellt, mit welchem das als Abgasrohr ausgebildete Maschinenelement 4 mittels eines Verbindungselements 5 in Form einer Schraube in bekannter Weise verbunden ist. Die Längsachsen des Aggregats bzw. Rotors 2 sowie das Maschinenelements bzw. Abgasrohrs 4 verlaufen im Wesentlichen orthogonal zur Zeichenebene. Nachfolgend werden das Aggregat bzw. das Maschinenelement der Einfachheit halber als Motor 2 bzw. als Abgasrohr 4 bezeichnet, wobei die Erläuterungen sinngemäß für anders ausgebildete Aggregate bzw. Maschinenelemente analog gelten. Ferner sei festgehalten, dass in den Zeichnungen der Zylinderkopf des Motors 2 teilweise dargestellt ist. Mittels der Befestigungsvorrichtung 6 ist die Verkleidung 8 mittelbar mit dem Abgasrohr 4 verbunden und / oder bezüglich des Motors 2 festgelegt, wobei zwischen dem Abgasrohr 4 und der dieses umgehenden Verkleidung 8 ein Abstand bzw. Zwischenraum 9 vorhanden ist Es ist eine Halte- und / oder Stützeinrichtung 10 vorgesehen, welche in vorteilhafter Weise fest an der Außenfläche des Motors 2 anliegt und mittels der Befestigungsvorrichtung 6 an die Außenfläche des Motors 2 unter Vorspannung angedrückt ist. Ferner ist ein Flansch 11 vorgesehen, insbesondere zur Verbindung mit einer weiteren Verkleidung oder Verkleidungsvorrichtung, beispielsweise eines Abgasturboladers. Die Halteeinrichtung 10 ist zweckmäßig als ein Stützblech ausgebildet, welches bevorzugt mit einem abgewinkelten Teil 12, insbesondere zwecks Montageerleichterung, bezüglich eines Motorteils 14 arretiert ist, welches hier beispielshaft als eine Schraube ausgebildet ist. Es sei ausdrücklich festgehalten, dass zur Montage der Verkleidungsvorrichtung und insbesondere deren Halteeinrichtung 10 das Motorteil bzw. die Schraube 14 nicht gelöst und entfernt werden muss und insgesamt am Motor keine Änderungen und / oder Bearbeitungsmaßnahmen und / oder gar eine Demontage des Zylinderkopf oder weiterer Bauteile des Motors erforderlich sind. Der Teil 12 der Halteeinrichtung, welche nachfolgend auch Stützeinrichtung 10 genannt wird, ist vielmehr als eine Öffnung oder Öse 16 ausgebildet, durch welche der Motorteil bzw. der Schraubenkopf 14 durchgreift. Zur Montage der Stützeinrichtung, welche auch als Haltereinrichtung 10 ausgebildet ist, wird diese lediglich in den Motorteil 14 eingehängt. Die Stützeinrichtung bzw. Haltereinrichtung 10 besitzt in Richtung der Längsachse vorteilhaft mehrere derartige Öffnungen oder Ösen 12, deren Ausbildung und / oder Anordnung auf mehrere am Motor 2 vorhandene Motorteile 14 abgestimmt sind.

Die Befestigungsvorrichtung 6 enthält ein bevorzugt federelastisch ausgebildetes Element 18, welches einerseits am Abgasrohr 4 anliegt und andererseits bezüglich der Halteeinrichtung 10, über einen bevorzugt als Winkelstück ausgebildeten Körper 20 abgestützt ist. Der Körper 20 ist mittels wenigstens einem Verbindungselement 22, welches als gestrichelte Linie 22 angedeutet ist, mit der Halteeinrichtung 10 bevorzugt fest verbunden. Das oder die Verbindungselemente 22 können als Nietverbindungen ebenso ausgebildet sein wie als Schweißverbindungen. Des Weiteren kann im Rahmen der Erfindung alternativ die Halteeinrichtung 10 bzw. das Stützblech entsprechend dem Winkelstück 20 einteilig, insbesondere durch entsprechende Verformung oder Profilierung ausgebildet sein. Wie mittels des Pfeils 24 angedeutet, wird die Stützeinrichtung 10 durch die Befestigungsvorrichtung 6 nach dem Klemmprinzip gegen den Motor 2 bzw. an dessen Außenfläche gedrückt, und daher wird die Befestigungsvorrichtung als Klemmvorrichtung bezeichnet. Insoweit sei festgehalten, dass Teile oder Elemente der Klemmvorrichtung 6, wie bei diesem Ausführungsbeispiel der Bügel 18, federelastisch zwecks Erzeugung der Vorspannkraft bzw. Klemmwirkung ausgebildet sind. So kann zusätzlich oder alternativ auch das Winkelstück 20 federelastisch im Rahmen der Erfindung ausgebildet sein.

Die Verkleidungsvorrichtung, und zwar insbesondere deren Stützeinrichtung 10, enthält zweckmäßig in ihren seitlichen Endbereichen Profile 26, 28 und / oder ist dort durch Abkantungen profilartig oder zu Profilen ausgebildet. Die Verkleidung 8 enthält dem Motor 2 zugewandte Ränder 30, 31, welche in mittels der Profile 26, 28 und / oder der Halteeinrichtung 10 ausgebildete Ausnehmungen oder Spalte eingreifen. Die Ränder 30, 31 und die Halteeinrichtung 10 und / oder deren Profile 26 sind derart ausgebildet und / oder aufeinander abgestimmt, dass eine dichte Verbindung sichergestellt ist. Zur dauerhaften aber gleichwohl lösbaren Ausbildung der Verbindung sind beispielsweise mittels strichpunktierten Linien 32 angedeutete lösbare Schrauben 32 vorgesehen. Aufgrund des Eingreifens der Ränder 30, 31 der Verkleidung 8 in die Profile 26, 28 ist ein dichter Abschluss sichergestellt, so dass ein unerwünschter Wärmeabfluss aus dem Innenraum 34 nach außen unterbunden ist. Die Verkleidung 8 enthält insbesondere einen Außenmantel 36 und einen Innenmantel 38, insbesondere aus Stahlblechen oder Stahlfolien, wobei im Zwischenraum zwischen denselben ein geeignetes und / oder wärmedämmendes Isoliermaterial 40 angeordnet ist. Die Größe des Abstandes zwischen dem Außenmantel 36 und dem Innenmantel 38 und / oder die Dicke bzw. die Wärmedämmeigenschaften des Isoliermaterials 40 sind den Anforderungen entsprechend und insbesondere der Temperatur des durch das Abgasrohr strömende Abgas derart vorgegeben, dass an der äußeren Oberfläche des Außenmantels 36 eine vorgegebene Temperatur, insbesondere im Bereich von 100° C, nicht überschritten wird.

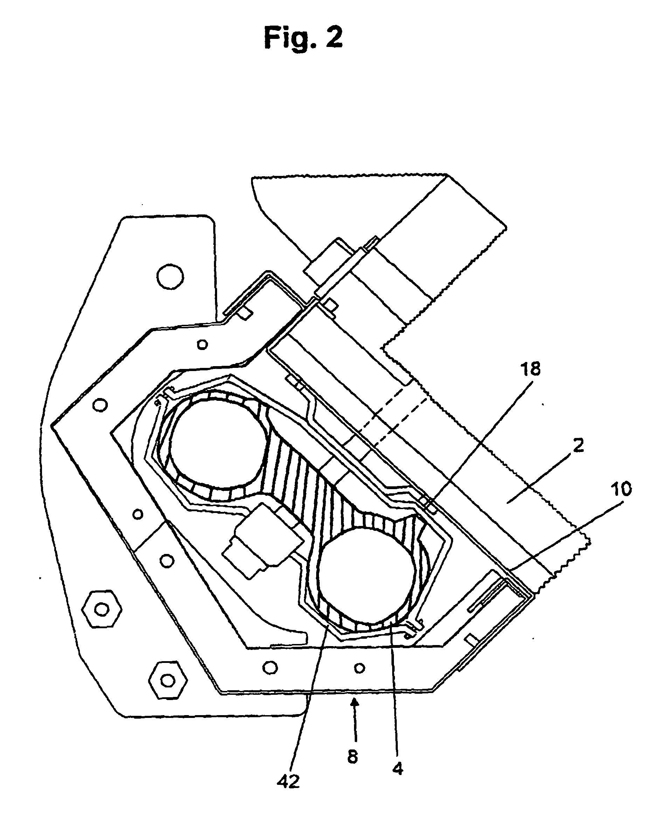

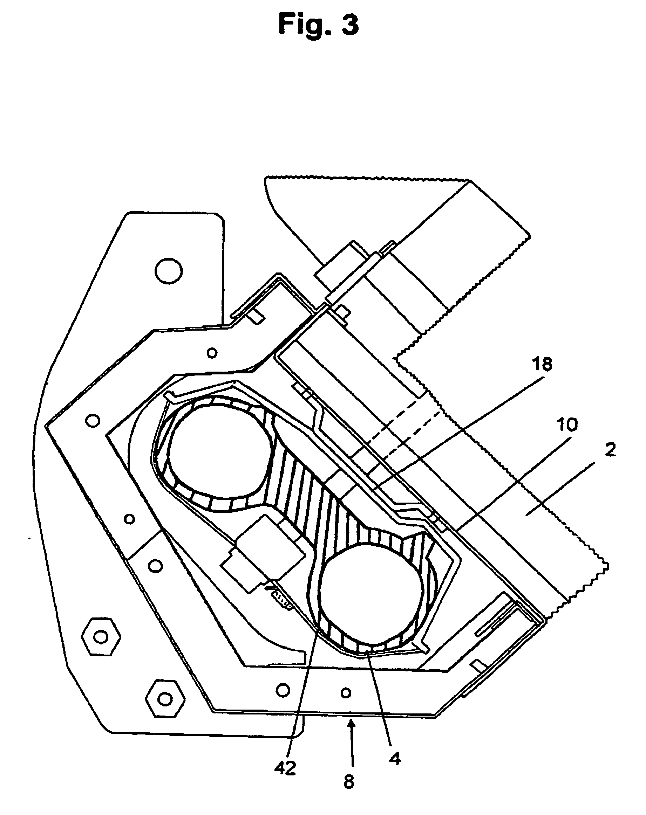

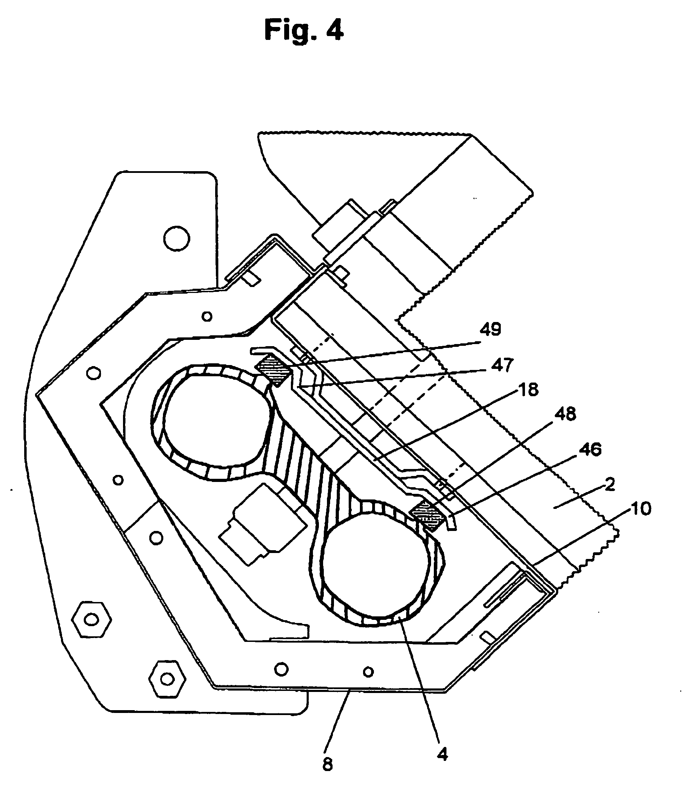

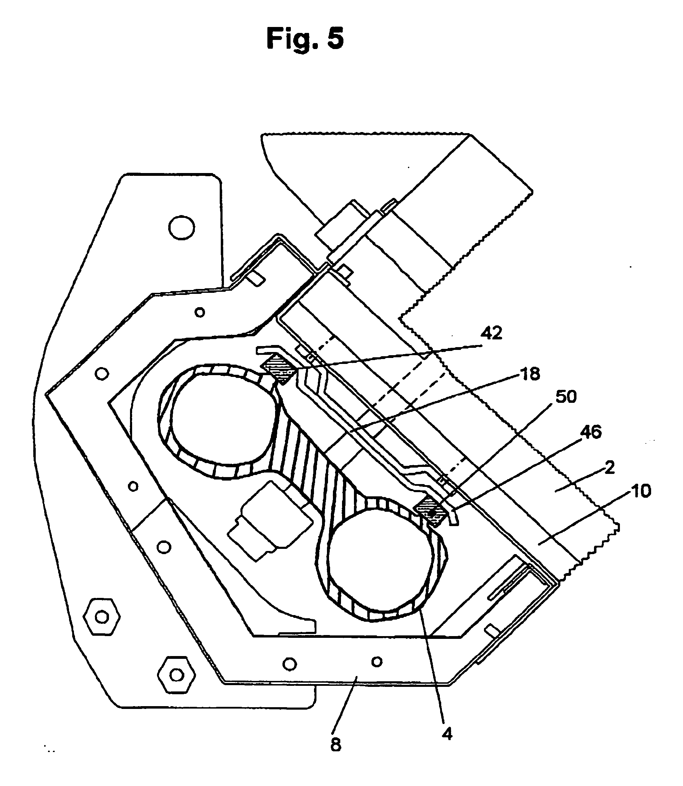

Fig. 2 bis 5 zeigen weitere Ausführungsbeispiele der nach dem Klemmprinzip erfindungsgemäß auf und / oder an dem Motor 2 festgelegten Verkleidungsvorrichtung, wobei hinsichtlich der übereinstimmenden Bauteile auf die Erläuterungen zu Fig. 1 verwiesen sei. Gemäß Fig. 2 ist der Bügel 18 verlängert ausgebildet und Bestandteil einer Rohrschelle, welche mit einem weiteren Stützteil 42 das Abgasrohr 4 umgreift. Beim Ausführungsbeispiel gemäß Fig. 3 ist mit dem gleichfalls verlängert ausgebildeten Bügel 18 ein Spannband 44 verbunden, welches zusammen mit dem Bügel 18 das Abgasrohr 4, 8 umgibt und in Kombination mit der Halteeinrichtung 10 die Festlegung der Verkleidung 8 am Motor 2 sicherstellt. Gemäß Fig. 4 sind zwischen dem zwei Winkelteile 46, 47 aufweisenden Bügel 18 und dem Abgasrohr 4 jeweils ein Federpaket 48, 49 vorgesehen. Wie bei den anderen Ausführungsbeispielen ist somit die Halteeinrichtung 10 in Kombination mit der federelastischen Ausbildung des Bügels 18 und / oder der Federpakete 48, 49 unter Vorspannung gegen das Abgasrohr 4 abgestützt und die Verkleidung 8 ist mittelbar am Abgasrohr 4 befestigt. Bei dem in Fig. 5 dargestellten Ausführungsbeispiel ist der Bügel 18 an seinen Enden ebenfalls mit Winkelteilen 46, 47 versehen, wobei in deren Bereich jeweils ein federelastisches Element 50, 52, welches auch Stop-choc genannt wird, angeordnet, welche gegenüberliegend den Winkelteilen 46, 47 am Abgasrohr 4 anliegen und / oder an diesem abgestützt sind.

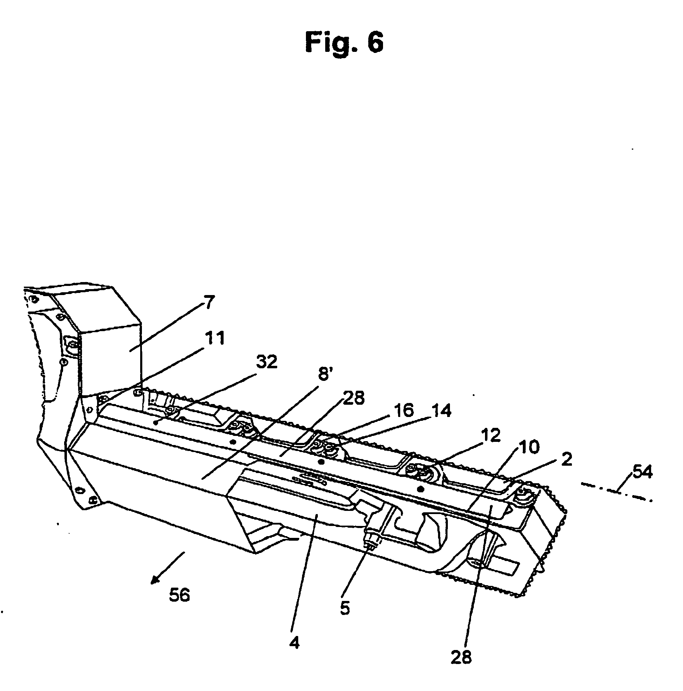

Fig. 6 zeigt in perspektivischer Darstellung die erfindungsgemäße Verkleidungsvorrichtung, wobei der Motor 2 wiederum teilweise dargestellt ist. Die Verkleidungsvorrichtung ist ebenso wie die an bzw. auf dem Motor 2 angeordnete Halteeinrichtung 10 im Wesentlichen parallel zu deren Längsachse 54 angeordnet. Die Verkleidung besteht aus mehreren Teilen, wobei hier der eine Verkleidungsteil 8' dargestellt ist, während die anderen Verkleidungsteile nicht dargestellt sind, so dass das Abgasrohr 4, ebenso wie dessen Verbindungselement 5, gut sichtbar sind. Es sei angemerkt, dass das Abgasrohr 4 sowie weitere Abgasrohre des Motors 2 analog mit diesem in bekannter Weise fest verbunden sind. Die Halte- oder Stützeinrichtung 10 enthält mehrere, zweckmäßig angewinkelte Teile 12 mit den Ösen 16, durch welche die Motorteile 14 durchgreifen. Die mit ihrem Rand in den Spalt zwischen dem Profil 28 und der übrigen Halteeinrichtung 10 eingreifende Verkleidung 8' ist mittels den Schrauben 32 lösbar befestigt und bei Bedarf in Richtung des Pfeiles 56 von der Halteeinrichtung 10 abnehmbar. Eine weitere Verkleidung 7 oder ein Teil derselben ist über den Flansch 11 mit der Verkleidung bzw. deren Verkleidungsteil 8' und / oder mit der Stützeinrichtung 10 und / oder dem Motor 2 analog verbunden. Die Verkleidung 7 umgibt zumindest teilweise ein weiteres, hier nicht dargestelltes, Maschinenelement, welches insbesondere als ein in bekannter Weise mit dem Motor 2 verbundener Abgasturbolader ausgebildet ist. Auch die Verkleidung 7 ist in vorteilhafter Weise analog zu obigen Erläuterungen mit dem genannten Maschinenelement bzw. Abgasturbolader bevorzugt lösbar verbunden.

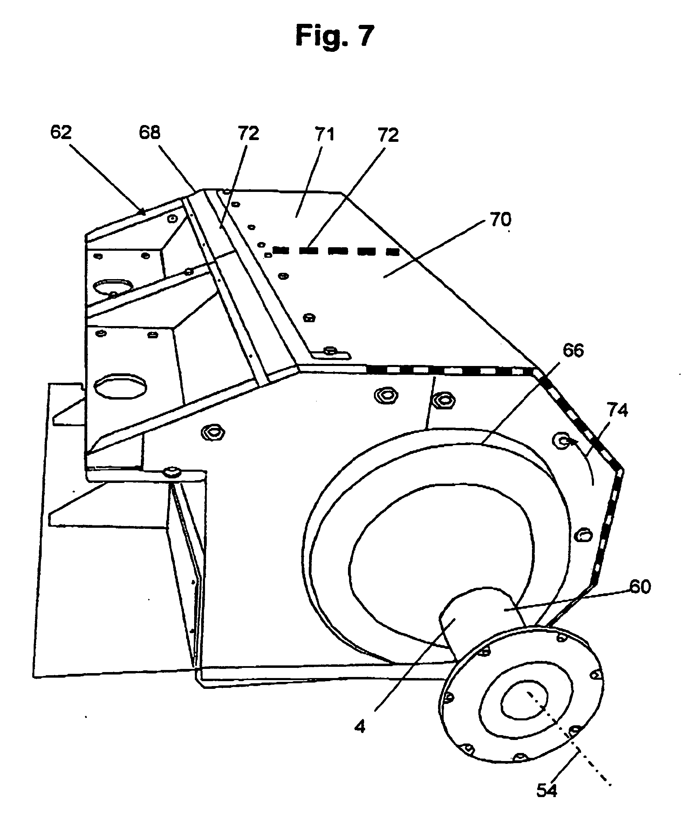

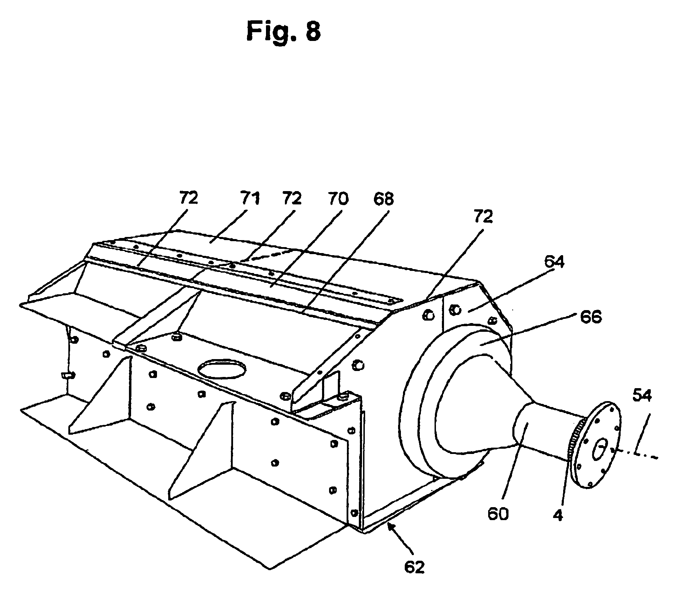

In Fig. 7 und 8 ist eine besondere Ausgestaltung der erfindungsgemäßen Verkleidungsvorrichtung perspektivisch dargestellt. Das Maschinenelement ist beispielshaft als ein Abgasrohr 4 ausgebildet, welches von der Verkleidungsvorrichtung umgeben ist bzw. diese durchdringt. Auf der Außenseite des Abgasrohrs 4 ist unmittelbar eine erste Isolierung 60 angeordnet. Die Verkleidung enthält ein Gehäuse 62 mit einem Innenraum, durch welchen das mit der Isolierung 60 umgebene Abgasrohr durchgeführt ist, wobei zwischen der Innenfläche des Gehäuses 62 und der Außenfläche der Isolierung 60 ein vorgegebener Abstand vorhanden und / oder wobei dieser Innenraum von Luft durchströmbar ist. An den beiden Enden weist das Gehäuse 62 Verkleidungsteile 64 auf, welche beispielsweise mittels einer bevorzugt federelastischen Manschette 66 bezüglich des Abgasrohrs 4 bzw. dessen Isolierung 60 dichtend und / oder bei Bedarf lösbar festgelegt sind. Ggf. können im Innenraum weitere Verbindungselemente der Verkleidungsvorrichtung bzw. deren Gehäuse 62 mit dem Abgasrohr 4 vorgesehen sein. Es ist von besonderer Bedeutung, dass das Gehäuse 62 und / oder die Verkleidungsvorrichtung, welche das Abgasrohr bevorzugt im Wesentlichen dicht umschließt, an seiner Außenseite zwei Verkleidungsteile 68, 70 aufweist, welche in radialer Richtung, bezogen auf die Längsachse 54, einen vorgegebenen Abstand zueinander aufweisen, derart, dass zwischen den Verkleidungsteilen 68, 70 ein von Luft durchströmbarer Zwischenraum vorhanden ist. Wie ersichtlich, erstrecken sich die Verkleidungsteile 68, 70, bezogen auf die Längsachse 54, über einen vorgegebenen Winkelbereich, und zwar zweckmäßig über einen Winkelbereich größer als 180°. Die Verkleidungsteile 68, 70 sind bevorzugt als beabstandet zueinander angeordnete Bleche mit einer an die Außenkontur des Gehäuses 62 bzw. den übrigen Teilen der Verkleidung angepassten Form ausgebildet.

Des Weiteren sind im Bereich der Längserstreckung der Verkleidungsteile 68, 70 Durchtrittsöffnungen 72 für die durch den Zwischenraum strömende Luft vorgesehen. Weiterhin sind im Bereich der axialen Stirnseiten der Verkleidungsteile 68, 70 ebenso wie im Verbindungsbereich der axial aneinander schließenden Verkleidungsteile 70, 71 Durchtrittsöffnungen 72 vorgesehen. Der genannte Zwischenraum zwischen dem radial innenliegenden Verkleidungsteil 68 und dem oder den radial außen angeordneten Verkleidungsteilen 70, 71 wird in Richtung des Pfeiles 74 in vorteilhafter Weise von unten nach oben durchströmt, und zwar zweckmäßig bereits aufgrund der Konvektion. Des Weiteren kann zusätzlich in bevorzugter Weise im unteren Bereich der Verkleidungsvorrichtung, wobei in diesem Bereich hier nicht weiter dargestellte Durchlassöffnungen zum Einströmen der Luft vorhanden sind, ein Gebläse angeordnet sein zur Förderung der Luft durch den genannten Zwischenraum, wobei nach dem Durchströmen des Zwischenraums die Luft durch die Durchtrittsöffnungen 72 nach außen abströmt. Aufgrund der durchströmenden Luft wird somit eine zusätzliche Kühlung und / oder Temperaturminderung derart erreicht, dass an der äußeren Oberfläche der Verkleidungsteile 70, 71 eine erheblich verminderte Temperatur vorherrscht.

Es sei festgehalten, dass bereits durch die direkt auf der Außenfläche des Abgasrohrs angeordnete Isolierung 60 eine erste Temperaturminderung vorgegeben ist. Eine zweite Temperaturminderung nach außen wird durch die Luft im Innenraum der Verkleidungsvorrichtung erreicht, wobei bevorzugt in dem Innenraum eine Luftströmung vorherrscht und / oder vorgegeben ist. Eine dritte Temperaturminderung wird in bevorzugter Weise mittels der erläuterten an der Außenseite der Verkleidungsvorrichtung angeordneten Verkleidungsteile 68, 70, 71 und die dem genannten Zwischenraum durchströmende Luft erreicht. Durch die vorgeschlagene Kombination und Ausbildung der Verkleidungsvorrichtung wird somit eine besonders effektive Temperaturminderung erreicht. Durch die anhand der Fig. 7 und 8 erläuterte Ausgestaltung der Verkleidungsvorrichtung ist erfindungsgemäß eine Dämmanordnung geschaffen, welche auch sehr hohen Sicherheitsanforderungen entspricht und welche gleichwohl einen einfachen Aufbau aufweist, ebenso wie einen geringen Fertigungs- und Montageaufwand erfordert. Erfindungsgemäß können die anhand der Fig. 7 und 8 erläuterten Verkleidungsteile mit wenigstens einem der Ausführungsbeispiele gemäß Fig. 1 bis 6 kombiniert und / oder in diese integriert sein.

### Bezugszeichen

- 2: Aggregat / Motor
- 4: Maschinenelement / Abgasrohr
- 5: Verbindungselement für 4 an 2
- 6: Befestigungsvorrichtung / Klemmvorrichtung
- 7, 8: Verkleidung
- 9: Abstand zwischen 4 und 8
- 10: Stützeinrichtung / Halteeinrichtung
- 11: Flansch
- 12: Teil von 10
- 14: Motorteil / Schraube
- 16: Öffnung / Öse in 12
- 18: Element / Bügel
- 20: Winkelstück / Körper
- 22: Verbindungselement
- 24: Pfeil / Vorspannkraft
- 26, 28: Profil
- 30, 31: Rand von 8
- 32: strichpunktierte Linie / Schraube
- 34: Innenraum zwischen 4 und 8
- 36: Außenmantel von 8
- 38: Innenmantel von 8
- 40: Isoliermaterial
- 42: Stützteil
- 44: Spannband
- 46, 47: Winkelteil von 18
- 48, 49: Federpaket
- 50, 62: federelastisches Element / Stop-choc
- 54: Längsachse von 2 bzw. 4
- 56: Pfeil
- 60: Isolierung von 4
- 62: Gehäuse
- 64: Verkleidungsteil
- 66: Manschette
- 68,70, 71: Verkleidungsteil
- 72: Durchtrittsöffnung
- 74: Pfeil

## Patentansprüche

1. Verkleidungsvorrichtung für ein von einem insbesondere heißen Medium durchströmbares Maschinenelement (4), insbesondere Abgasrohr, welches mit einem Aggregat (2) verbunden ist, enthaltend eine Verkleidung (8), welche das Maschinenelement (4) teilweise oder zumindest teilweise umgibt und bezüglich dem Aggregat (2) mittels einer Befestigungsvorrichtung (6) festgelegt ist, wobei eine Halteeinrichtung (10) vorgesehen ist, welche mittels der Befestigungsvorrichtung (6) am Aggregat (2) festgelegt ist, und die Verkleidung (8) mit der Halteeinrichtung (10) zumindest näherungsweise dicht verbunden ist, wobei die Verkleidung (8) das Maschinenelement (4) kappenartig teilweise umgibt und dem Aggregat (2) zugewandte Ränder (30, 31) aufweist und wobei die Halteeinrichtung (10) Profile (26, 28) aufweist, weiche fest mit der Halteeinrichtung (10) verbunden sind oder Bestandteile derselben sind und in welche die Ränder (30, 31) der Verkleidung (8) formschlüssig und/oder abdichtend eingreifen, **dadurch gekennzeichnet,**
**dass** die Befestigungsvorrichtung (6) als Klemmvorrichtung ausgebildet und zwischen dem Maschinenelement (4) und dem Aggregat (2) angeordnet ist, wobei die Befestigungsvorrichtung(6) ein federelastisches Element (18; 48, 49; 50, 52) enthält, und dass die Halteeinrichtung (10) mit vorgegebener Vorspannung an das Aggregat (2) gedrückt wird, wobei das genannte Element (18; 48, 49; 50, 52) einerseits am Maschinenelement (4) und andererseits an der Halteeinrichtung (10) abgestützt und/oder an dieser mittelbar festgelegt ist.

2. Verkleidungsvorrichtung nach Anspruch 1, **dadurch gekennzeichnet, dass** die Verkleidung (8), insbesondere mittels Schrauben (32), lösbar mit der Halteeinrichtung (10) verbunden ist.

3. Verkleidungsvornchtung nach Anspruch 1 oder 2, **dadurch gekennzeichnet, dass** Verbindungselemente, insbesondere Schrauben (32), zur Verbindung der Ränder (30, 31) mit dem Profil (26, 28) der Halteeinrichtung (10) angeordnet sind.

4. Verkleidungsvorrichtung nach einem der Ansprüche 1 bis 3, **dadurch gekennzeichnet, dass** die Halteeinrichtung (11) wenigstens eine Öffnung oder Öse (16) aufweist, in welche ein Teil des Aggregats (2) oder eine mit diesem fest verbundene Schraube (14) oder deren Kopf eingreift.

5. Verkleidungsvorrichtung, nach einem der Ansprüche 1 bis 4, **dadurch gekennzeichnet, dass** die Verkleidung (8) mit vorgegebenen Abständen (9) das Maschinenteil (4) umgibt, wobei die Befestigungsvorrichtung (6) innerhalb der Verkleidung (8) und zwischen dem Maschinenelement (2) und dem Aggregat (2), insbesondere der am Aggregat (2) festgelegten Halteeinrichtung (10), in einem Innenraum (34) angeordnet ist.

6. Verkleidungsvorrichtung nach einem der Ansprüche 1 bis 5, **dadurch gekennzeichnet, dass** die Befestigungsvorrichtung (6) ein dem Maschinenelement (4) zugewandtes und/oder zugeordnetes Element (18), insbesondere einen Bügel, enthält.

7. Verkleidungsvorrichtung nach Anspruch 6, **dadurch gekennzeichnet, dass** das Element (18) ein Winkelteil (46, 47) aufweist.

8. Verkleidungsvorrichtung nach Anspruch 6 oder 7, **dadurch gekennzeichnet, dass** das Element (18) im Bereich seiner dem Maschinenelement (4) abgewandten Seite an einem mit der Halteeinrichtung (10) verbundenen Körper (20) zumindest teilweise anliegt und/oder abgestützt ist, wobei wenigstens ein Ende des Elements (18) einen vorgegebenen und Infolge der Vorspannung veränderbaren Abstand zur Halteeinrichtung (10) oder deren Körper (20) aufweist.

9. Verkleidungsvorrichtung, nach einem der Ansprüche 1 bis 8, **dadurch gekennzeichnet, dass** die Verkleidung (8) im Bereich ihrer radialen Außenseite zwei beabstandet zueinander angeordnete Verkleidungsteile (68 bzw. 70, 71) derart aufweist, dass zwischen den Verkleidungsteien (68 bzw. 70, 71) ein von Luft durchströmbarer Zwischenraum vorhanden ist, welcher sich über einen vorgegebenen Winkelbereich, bevorzugt größer als 180°, bezogen auf die Längsachse (40) erstreckt.

10. Verkleidungsvorrichtung nach einem der Ansprüche 1 bis 9, **dadurch gekennzeichnet, dass** auf der Außenfläche des Maschinenelements (4) eine isolierung (60) angeordnet ist.

11. Verkleidungsvorrichtung nach einem der Ansprüche 5 bis 10, **dadurch gekennzeichnet, dass** der innerhalb der Verkleidung (8) vorhandene Innenraum (34) von Luft durchströmbar oder Luft enthaltend ausgebildet ist.

## Claims

1. A covering device for a machine element (4), through which an in particular hot medium can flow, in particular an exhaust pipe, which is connected to an aggregate (2), including a covering (8), which partially or at least partially surrounds the machine element (4) and which is fixed relative to the aggregate (2) by means of a fastening device (6), wherein provision is made for a holding device (10), which is fixed on the aggregate (2) by means of the fastening device (6), and the casing (8) is at least approximately connected tightly to the holding device (10), wherein the casing (8) partially surrounds the machine element (4) in a cap-like manner and encompasses edges (30, 31), which face the aggregate (2), and wherein the holding device (10) encompasses profiles (26, 28), which are fixedly connected to the holding device (10) or which are components thereof and with which the edges (30, 31) of the casing (8) engage in a form-locking manner and/or so as to form a seal,
**characterized in**
**that** the fastening device (6) is embodied as clamping device and is arranged between the machine element (4) and the aggregate (2), wherein the fastening device (6) includes a spring-elastic element (18; 48, 49; 50, 52) and in that the holding device (10) is pressed against the aggregate (2) at a predetermined prestress, wherein said element (18; 48, 49; 50, 52) is supported on the machine element (4) on the one side and on the holding device (10) on the other side and/or is fixed thereto indirectly.

2. The covering device according to claim 1, **characterized in that** the covering (8) is connected to the holding device (10) so as to be capable of being removed, in particular by means of screws (32).

3. The covering device according to claim 1 or 2, **characterized in that** connecting elements, in particular screws (32), are arranged for connecting the edges (30, 31) to the profile (26, 28) of the holding device (10).

4. The covering device according to one of claims 1 to 3, **characterized in that** the holding device (11) encompasses at least one opening or eye (16), with which a part of the aggregate (2) or a screw (14), which is fixedly connected thereto, or the head thereof engages.

5. The covering device according to one of claims 1 to 4, **characterized in that** the casing (8) surrounds the machine part (4) at predetermined distances (9), wherein the fastening device (6) is arranged in an inner space (34) within the covering (8) and between the machine element (2) and the aggregate (2), in particular the holding device (10), which is fixed to the aggregate (2).

6. The covering device according to one of claims 1 to 5, **characterized in that** the fastening device (6) includes an element (18), in particular a clamp, which faces and/or which is assigned to the machine element (4).

7. The covering device according to claim 6, **characterized in that** the element (18) encompasses an angled part (46, 47).

8. The covering device according to claim 6 or 7, **characterized in that** the element (18) adjoins at least partially on a body (20), which is connected to the holding device (10), in the area of its side, which faces away from the machine element (4), and/or is supported thereon, wherein at least one end of the element (18) encompasses a distance to the holding device (10) or to the body (20) thereof, with said distance being predetermined, and being capable of being changed due to the prestress.

9. The covering device according to one of claims 1 to 8, **characterized in that** the covering (8), in the area of its radial outer side, encompasses two covering parts (68 or 70, 71, respectively), which are arranged at a distance to one another such that a space, through which air can flow and which extends across a predetermined angular range, preferably greater than 180° based on the longitudinal axis (40), is available between the covering parts (68 or 70, 71, respectively).

10. The covering device according to one of claims 1 to 9, **characterized in that** an insulation (60) is arranged on the outer surface of the machine element (4).

11. The covering device according to one of claims 5 to 10, **characterized in that** the inner space (34), which is available within the covering (8), is embodied so that air can flow through it or so that it can contain air.

## Revendications

1. Dispositif d'habillage pour un élément de machine (4) pouvant être traversé par un fluide en particulier chaud, en particulier un tuyau d'échappement, qui est relié à un groupe (2), contenant un habillage (8), lequel entoure partiellement ou au moins partiellement l'élément de machine (4) et est fixé par rapport au groupe (2) au moyen d'un dispositif de fixation, un système de retenue (10) étant prévu, lequel est fixé au moyen du dispositif de fixation (6) sur le groupe (2), et l'habillage (8) étant relié au moins approximativement de façon étanche au système de retenue (10), l'habillage (8) entourant partiellement l'élément de machine (4) à la façon d'un capot et présentant des bords (30, 31) associés au groupe (2) et le système de retenue (10) présentant des profilés (26, 28) qui sont reliés fixement au système de retenue (10) ou sont des éléments consécutifs de ce système et dans lesquels les bords (30, 31) de l'habillage (8) s'engagent par complémentarité de formes et/ou de façon étanche,
**caractérisé**
**en ce que** le dispositif de fixation (6) est conçu comme dispositif de serrage et est disposé entre l'élément de machine (4) et le groupe (2), le dispositif de fixation (6) contenant un élément à élasticité de ressort (18 ; 48, 49 ; 50, 52), et en ce que le système de retenue (10) est appuyé avec une tension préliminaire prédéfinie sur le groupe (2), ledit élément (18 ; 48, 49 ; 50, 52) étant soutenu d'une part sur l'élément de machine (4) et d'autre part sur le système de retenue (10) et/ou étant fixé indirectement sur ce système.

2. Dispositif d'habillage selon la revendication 1, **caractérisé en ce que** l'habillage (8) est relié, en particulier au moyen de vis (32), de façon amovible au système de retenue (10).

3. Dispositif d'habillage selon la revendication 1 ou 2, **caractérisé en ce que** des éléments de liaison, en particulier des vis (32), sont disposés pour la liaison des bords (30, 31) avec le profilé (26, 28) du système de retenue (10).

4. Dispositif d'habillage selon l'une quelconque des revendications 1 à 3, **caractérisé en ce que** le système de retenue (11) présente au moins une ouverture ou un oeillet (16) dans lequel s'engage une partie du groupe (2) ou une vis (14) est reliée fixement à cette partie ou sa tête.

5. Dispositif d'habillage selon l'une quelconque des revendications 1 à 4, **caractérisé en ce que** l'habillage (8) entoure l'élément de machine (4) avec des espacements (9) prédéfinis, le dispositif de fixation (6) étant disposé à l'intérieur de l'habillage (8) et entre l'élément de machine (2) et le groupe (2), en particulier le système de retenue (10) fixé sur le groupe (2), dans un espace intérieur (34).

6. Dispositif d'habillage selon l'une quelconque des revendications 1 à 5, **caractérisé en ce que** le dispositif de fixation (6) contient un élément (18) tourné vers l'élément de machine (4) et/ou associé à celui-ci, en particulier un étrier.

7. Dispositif d'habillage selon la revendication 6, **caractérisé en ce que** l'élément (18) est une partie coudée (46, 47).

8. Dispositif d'habillage selon la revendication 6 ou 7, **caractérisé en ce que** l'élément (18) s'applique et/ou est soutenu au moins partiellement dans la zone de son côté opposé à l'élément de machine (4) sur un corps (20) relié au système de retenue (10), au moins une extrémité de l'élément (18) présentant une distance au système de retenue (10) ou au corps (20) de celui-ci qui est prédéfinie et est variable en fonction de la tension préliminaire.

9. Dispositif d'habillage selon l'une quelconque des revendications 1 à 8, **caractérisé en ce que** l'habillage (8) présente dans la zone de son côté extérieur radial deux parties d'habillage (68 et 70, 71) disposées à distance l'une de l'autre de telle sorte qu'entre les parties d'habillage (68 et 70, 71) est présent un espace intermédiaire pouvant être traversé par de l'air, qui s'étend sur une zone d'angle prédéfinie, de préférence supérieure à 180°, par rapport à l'axe longitudinal (40).

10. Dispositif d'habillage selon l'une quelconque des revendications 1 à 9, **caractérisé en ce qu'**une isolation (60) est disposée sur la surface extérieure de l'élément de machine (4).

11. Dispositif d'habillage selon l'une quelconque des revendications 5 à 10, **caractérisé en ce que** l'espace intérieur (34) présent à l'intérieur de l'habillage (8) est conçu de façon à pouvoir être traversé par de l'air ou contenant de l'air.
